(19) Europäisches Patentamt

European Patent Office

Office européen des brevets

(11) **EP 1 158 311 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.$^7$: **G01S 13/93**, G01S 13/34, G01S 13/58

(21) Anmeldenummer: **01112301.5**

(22) Anmeldetag: **19.05.2001**

(54) **Vorrichtung und Verfahren zur Abstands- und Geschwindigkeitsbestimmung**

Device and method for distance and velocity determination

Dispositif et procédé pour déterminer la distance et la vitesse

(84) Benannte Vertragsstaaten:
**DE FR GB IT SE**

(30) Priorität: **25.05.2000 DE 10026032**

(43) Veröffentlichungstag der Anmeldung:
**28.11.2001 Patentblatt 2001/48**

(73) Patentinhaber: **Bayerische Motoren Werke Aktiengesellschaft**
**80809 München (DE)**

(72) Erfinder: **Sauer, Thomas, Dr.**
**80804 München (DE)**

(56) Entgegenhaltungen:
**DE-A- 4 244 608        DE-A- 19 922 411**
**US-A- 5 625 362**

- **PATENT ABSTRACTS OF JAPAN vol. 1995, no. 07, 31. August 1995 (1995-08-31) -& JP 07 098375 A (TOYOTA MOTOR CORP), 11. April 1995 (1995-04-11)**
- **PATENT ABSTRACTS OF JAPAN vol. 1995, no. 10, 30. November 1995 (1995-11-30) -& JP 07 191133 A (FUJITSU TEN LTD), 28. Juli 1995 (1995-07-28)**

**Beschreibung**

Die Erfindung betrifft eine Vorrichtung und ein Verfahren zur Abstands- und Geschwindigkeitsbestimmung, insbesondere zwischen einem Fahrzeug und mehreren Objekten, wie bewegliche Ziele (Fahrzeuge) und Standziele.

In der DE 196 46 228 A1 wird ein Verfahren zur Abstandsbestimmung zweier Objekte beschrieben. Nach diesem Verfahren werden von einem Objekt, z.B. einem Fahrzeug, FMCW-Radarsignale ausgesandt, die von einem zweiten Objekt, z.B. von einem vorausfahrenden Fahrzeug teilweise reflektiert werden. Das reflektierte Signal wird aufgenommen und aus beiden Signalen wird das Differenzsignal gebildet. Das hierin beschriebene Verfahren ist insbesondere im Nahbereich anwendbar und bei Vorhandensein mehrerer Ziele. Das Zwischenfrequenzsignal wird mit Hilfe der Maximum-Entropie-Methode ausgewertet.

In der DE 42 44 608 A1 wird ein Radarverfahren zur Messung von Abständen und Relativgeschwindigkeiten zwischen einem Fahrzeug und in Fahrtrichtung vorhandenen Hindernissen beschrieben. Bei diesem bekannten Verfahren werden insgesamt vier Verfahrensschritte durchgeführt, wobei drei Messungen dazu dienen potentielle Hindernisse aufzufinden und mittels einer vierten Messung bei der Auswertung entstandene Geister- oder Scheinhindernisse ausgesondert werden.

Der vorliegenden Erfindung liegt die Aufgabe zugrunde, eine Vorrichtung und ein Verfahren bereitzustellen, mit dem eine genaue Abstands- und/oder Geschwindigkeitsbestimmung zwischen einem Fahrzeug und mehreren Objekten möglich ist und Fehldetektionen vermieden werden.

Diese Aufgabe wird mit den Merkmalen der Patentansprüche gelöst.

Die Erfindung geht von dem Grundgedanken aus, die von Standzielen reflektierten Radarsignale bei der Auswertung auszusortieren und die Meßergebnisse für die beweglichen Ziele auszuwerten.

Die Erfindung wird nachstehend anhand von Ausführungsbeispielen und der Zeichnung näher erläutert. Es zeigen:

Fig. 1a-c　den Frequenzverlauf eines Sendesignals und eines Empfangssignals und die zugehörigen Spektren anhand von drei Beispielen,

Fig. 2　ein Geschwindigkeitsabstandsdiagramm entsprechend einem Frequenzverlauf mit zwei Rampen wie er in Fig. 1c gezeigt ist, wenn ein Ziel vorhanden ist,

Fig. 3　ein Geschwindigkeitsabstandsdiagramm entsprechend Fig. 2, wenn zwei Ziele vorhanden sind,

Fig. 4　ein Geschwindigkeitsabstandsdiagramm bei einem FMCW-Radar, das vier Frequenzrampen verwendet, wenn zwei Ziele vorhanden sind,

Fig. 5　ein Geschwindigkeitsabstandsdiagramm für ein FMCW-Radar, das mit vier Frequenzrampen arbeitet, wenn vier Standziele vorhanden sind.

Die Erfindung und die zugehörigen Grundlagen eines FMCW-Radars wird nachstehend näher erläutert. Es ist insbesondere einsetzbar in Verbindung mit einem Fahrzeugführungssystem ACC (Adaptive Cruise Control) das in Kraftfahrzeugen eingesetzt wird. Die Erfindung ist aber auch unabhängig davon einsetzbar. Ein Fahrzeugführungssystem besteht im Wesentlichen aus einem herkömmlichen Tempomaten und einem Sensor, so daß die Fahrzeuggeschwindigkeit automatisch an den vorausfahrenden Verkehr angepaßt werden kann. Als Sensor wird bei den meisten ACC-Systemen ein Radar verwendet, da es robust gegenüber Schmutz und Schlechtwetterbedingungen ist. Erfindungsgemäß wird das FMCW (Frequency Modulation Continuos Wave)-Radar eingesetzt. Bei dem bekannten FMCW-Radar ist nicht immer eine zuverlässige Radardetektion möglich, insbesondere bei mehreren vorhandenen Zielen.

Prinzipiell bestimmt jedes Radar den Abstand zu einem Ziel über die Laufzeit der reflektierten Welle. Da Hin- und Rückweg berücksichtigt werden müssen, gilt für den Abstand: Abstand = Gesamtweg /2 2 = Laufzeit*Lichtgeschwindigkeit / 2.

Bei einem FMCW-Radar wird über einen langen Zeitraum ein Signal gesendet, dessen Frequenz linear ansteigt. Eine Welle, die mit der Frequenz $f_a$ losläuft und reflektiert wird, trifft im Empfänger auf ein Oszillatorsignal, das durch die Frequenzmodulation bereits eine Frequenz $f_b$ hat. Beide Signale werden miteinander gemischt, und es ergibt sich ein Zwischenfrequenz(ZF)-Signal mit der Frequenz $f_b f_a$. Eine Spektralanalyse liefert das Frequenzspektrum des ZF-Signals: ein Peak im Spektrum entspricht einer Zieldetektion, und aus der Lage des Peaks (=$f_b$-$f_a$) kann über die bekannte Frequenzänderungsrate die Laufzeit der Welle berechnet werden.

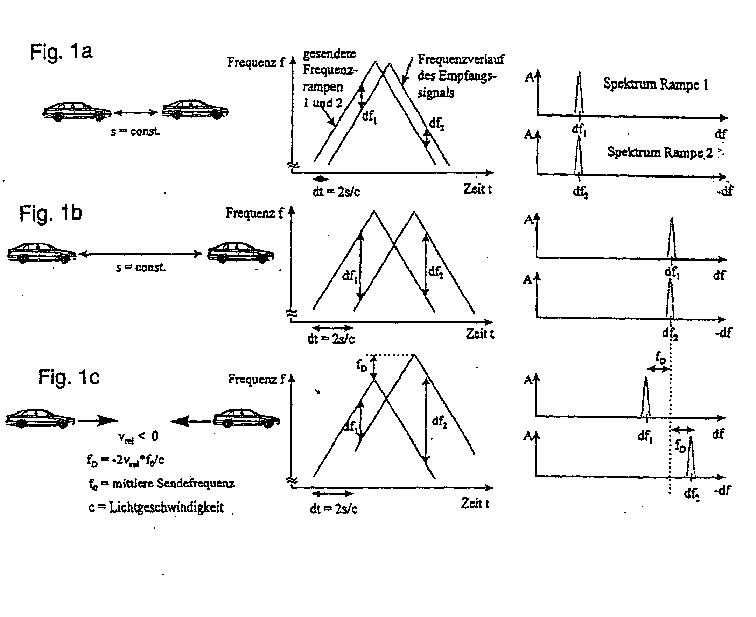

Fig. 1a zeigt den Frequenzverlauf des gesendeten Signals und des Empfangssignals sowie die zugehörigen Spektren anhand des Beispiels von zwei im konstanten Abstand hintereinander fahrenden Fahrzeugen. Im Einzelnen weist das gesendete Signal eine Frequenzrampe 1 mit ansteigender Flanke und eine Frequenzrampe 2 mit abfallender Flanke auf. Zeitlich versetzt um den Betrag dt ist der Frequenzverlauf des Empfangssignals gezeigt. Die Zeitverzögerung dt entspricht der Laufzeit des Signals, das den Abstand zweimal durchläuft (2s), wobei die Ausbreitungsgeschwindigkeit mit der Lichtgeschwindigkeit (c) angenommen wird. Das sich ergebende Zwischenfrequenzsignal (df$_1$ bzw. df$_2$) ist ein Maß für den Abstand zwischen den beiden Fahrzeugen. Das Spektrum für die Rampe 1 und für die Rampe 2 sind in der Fig. 1a ebenfalls gezeigt.

Die Fig. 1b entspricht im Wesentlichen der Fig. 1a, wobei hier der konstante Abstand zwischen den beiden Fahrzeugen größer ist und folglich der Wert für die Signallaufzeit dt und auch das Zwischenfrequenzsignal ($df_1$ bzw. $df_2$) größer ist.

Fig. 1c betrifft das Beispiel, bei dem zwei hintereinander fahrende Fahrzeuge mit unterschiedlicher Geschwindigkeit fahren und sich dadurch der Abstand fortlaufend ändert. Hierbei ist angenommen, daß die Relativgeschwindigkeit $v_{rel}$ kleiner 0 ist, d.h., der Abstand zwischen den beiden Fahrzeugen sich fortlaufend verringert. Diese Betrachtung gilt immer, wenn sich das Fahrzeug mit dem FMCW-Radar und das Ziel aufeinander zu- oder voneinander weg bewegen.

Bei einer Annäherung wird die Frequenz des reflektierenden Signals zu höheren Frequenzen hin verschoben, bei Entfernung zu tieferen Frequenzen. Der Betrag der Frequenzverschiebung ist direkt proportional zu der Relativgeschwindigkeit. Dies ist der sogenannte Doppler-Effekt. Um nun die Frequenzverschiebung durch die Modulation und die Frequenzverschiebung durch den Doppler-Effekt voneinander trennen zu können, wird ein weiteres Signal mit abnehmender Frequenz gesendet und ausgewertet.

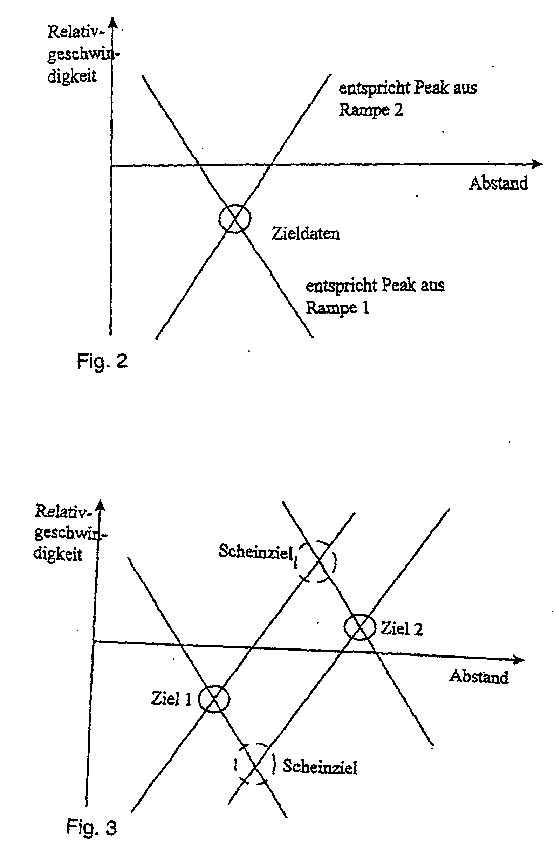

Über einfache lineare Algebra können nun aus den Positionen der Peaks in den Spektren der steigenden und der fallenden Frequenzrampe Abstand und Relativgeschwindigkeit des Ziels berechnet werden. Eine graphische Interpretation dieses Sachverhalts findet man in dem Geschwindigkeits-Abstands-Diagramm von Fig. 2.

Im Einzelnen zeigt Fig. 2 eine Gerade mit fallender Flanke, die dem Peak für die Rampe 1 von Fig. 1c entspricht und eine Gerade mit ansteigender Flanke, die dem Peak für die Rampe 2 aus der Fig. 1c entspricht. Bei diesem Beispiel ist nur ein Ziel vorhanden, wobei der Kreuzungspunkt der beiden Geraden der Relativgeschwindigkeit zwischen den beiden Fahrzeugen und dem Abstand zu einem bestimmten Zeitpunkt entspricht.

Wie in Fig. 3 gezeigt, detektiert das 2-Rampen FMCW-Radar insgesamt vier Geraden, wenn zwei Ziele vorhanden sind, und zwar zwei Geraden mit gleicher abfallender Flanke und zwei Geraden mit gleicher ansteigender Flanke. Neben den Kreuzungspunkten für das Ziel 1 und das Ziel 2 (durchgezogene Kreise) sind zwei weitere Kreuzungspunkte vorhanden, die zwei Scheinziele (gestrichelte Kreise) darstellen.

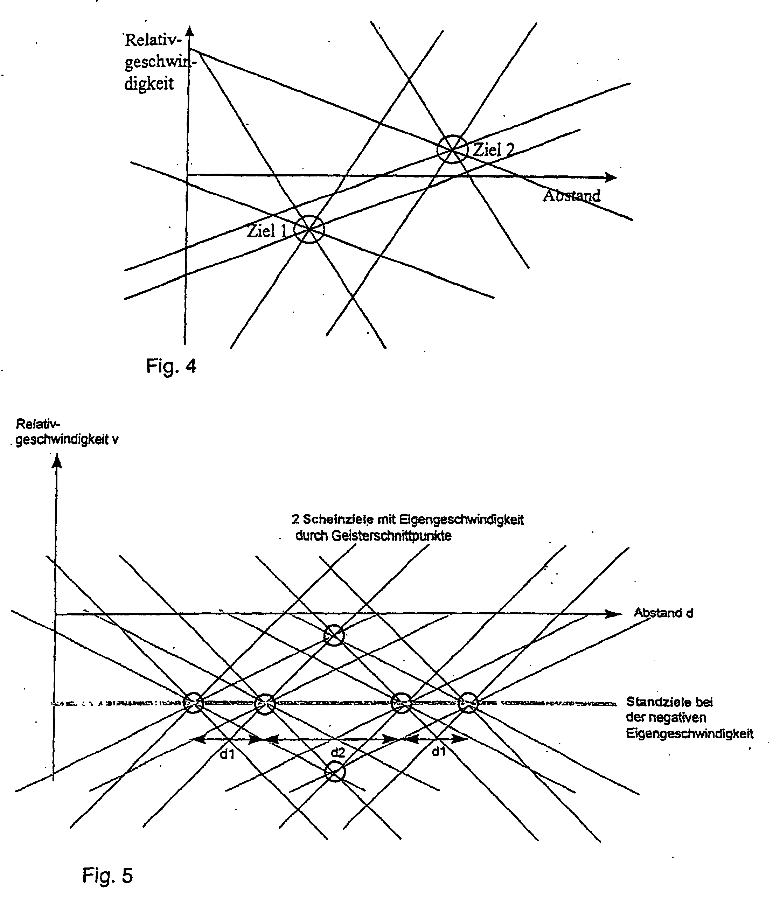

Um diese Fehldetektion ausschließen zu können, werden weitere Frequenzrampen mit betragsmäßig größeren oder kleineren Steigungen eingeführt. Fig. 4 zeigt die Zwei-Zielsituation von Fig. 3 mit insgesamt vier Frequenzrampen. Hier können die tatsächlichen Ziele 1 und 2 eindeutig über Viererschnittpunkte identifiziert werden. Mit anderen Worten, nur die Kreuzungspunkte von insgesamt vier Geraden werden als ein Ziel interpretiert. Das 4-Rampen-FMCW-Verfahren ermöglicht eine eindeutige Identifizierung von bis zu drei Zielen. Grundsätzlich ist eine Erweiterung der Mehrzielfähigkeit durch weitere zusätzliche Frequenzrampen möglich.

Während das vorstehend beschriebenen 4-Rampen-FMCW-Verfahren für normale Fahrsituationen, insbesondere bei Geradeausfahrt genaue Bestimmungen des Abstands und der Geschwindigkeit zuläßt, ohne daß es zu Fehldetektionen kommt, vergrößert sich das Problem von Scheinzieldetektionen insbesondere bei Kurvenfahrten. Bei Kurvenfahrten erfaßt das Radar sehr stark den Randbereich der Straße und damit viele Standziele. In Verbindung mit einem Fahrzeugführungssystem ACC kann es zu Fehlreaktionen des ACC kommen, da diese Scheinziele tatsächlich eine plausible Trajektorie aufbauen. Desweiteren kann durch die Kurvenfahrt der vom ACC prädizierte Fahrschlauch fälschlicherweise neben der Fahrbahn liegen, so daß diese Standziele vom ACC so gesehen werden, als ob sie in der eigenen Spur liegen. Erfindungsgemäß wird auf diese Standziele nicht reagiert um eine Fehlreaktion des ACC zu vermeiden. Gemäß einer bevorzugten Ausführungsform werden die Standziele dadurch eindeutig identifiziert, daß die Fahrzeuggeschwindigkeit erfaßt wird und die jeweiligen Relativgeschwindigkeiten der erfaßten Ziele mit der Fahrzeuggeschwindigkeit verglichen werden. Entspricht die Relativgeschwindigkeit der negativen Fahrzeuggeschwindigkeit, dann wird das gefundene Ziel als Standziel identifiziert. In der Fig. 5 sind insgesamt vier Standziele bei der negativen Eigengeschwindigkeit -vf gezeigt. Jedes dieser Standziele entspricht einem Viererschnittpunkt in dem Geschwindigkeitsabstandsdiagramm. Wenn die Standziele in einem bestimmtem Abstand zueinander liegen, können diese Geraden im gezeigten Beispiel zwei weitere Viererschnittpunkte bilden, die zwei Scheinzielen entsprechen. Das in der Fig. 5 gezeigte obere Scheinziel So entspricht einem langsamer vorausfahrenden Fahrzeug. Das untere Scheinziel Su entspricht einem entgegenkommenden Fahrzeug. D.h., es entsteht fälschlicherweise das Ergebnis, daß sich vor dem Fahrzeug ein langsam vorausfahrendes Fahrzeug befindet, auf das das ACC durch eine Fahrzeugverzögerung reagiert. Dies verursacht beim Fahrer und bei eventuell hinterherfahrenden Fahrzeugen erhebliche Irritationen.

Fig. 5 zeigt, wie beim 4-Rampen-FMCW-Radar ein solches Scheinziel auftreten kann. Es müssen vier Standziele gemessen werden, die folgendes Muster aufweisen: das Verhältnis ihrer gegenseitigen Abstandsdifferenzen muß gleich dem Verhältnis der Steilheiten der verwendeten Frequenzrampen sein. Dieser Fall mag zunächst als unwahrscheinlich erachtet werden, aber in den erwähnten Kurvensituationen werden sehr viel mehr als vier Standzeile gemessen, so daß man fast immer vier Standziele findet, die diese Bedingung erfüllen. Außerdem müssen aufgrund der verrauschten Empfängerdaten auch nicht-ideale 4-er-Schnittpunkte zugelassen werden, so daß diese Bedingung nicht exakt erfüllt sein muß.

Da die Standziele real vorhanden sind, werden sie über mehrere Zyklen hinweg gemessen. Das hat zur Folge, daß auch das Scheinziel über mehrere Meßzyklen hinweg detektiert wird, so daß eine plausible Trajektorie aufgebaut wird, was wiederum bei einer falschen Lage des Fahrschlauchs zu einer Fehlreaktion des ACC-Systems führen kann.

Eine hinreichende, aber nicht notwendige Bedingung für das Vorliegen von Geisterschnittpunkten läßt sich mit der folgenden Gleichung darstellen

$$d_1 : d_2 = \frac{\text{Steigung Gerade } 1, 2}{\text{Steigung Gercide } 3, 4},$$

wobei d1 der Abstand zwischen dem ersten und dem zweiten Standziel und der Abstand zwischen dem dritten und dem vierten Standziel ist,
d2 der Abstand zwischen dem zweiten und dem dritten Standziel ist.

Erfindungsgemäß werden die Standziele aus dem Geschwindigkeits-Abstandsdiagramm aussortiert. Am Beispiel des in Fig. 5 gezeigten 4-Rampen-FMCW-Radars werden die Ziele aussortiert, die eine Relativgeschwindigkeit gleich -vf aufweisen. vf ist die Fahrzeugeigengeschwindigkeit, d.h., die Geschwindigkeit, mit der sich ein Fahrzeug auf ein Standziel zubewegt. Vorzugsweise werden die Ziele in einem schmalen Band um die Gerade berücksichtigt, die durch die Bedingung v = -vf gekennzeichnet ist. Dies dient insbesondere dazu, daß Meßdaten, die verrauscht sind, Standziele liefern, die eine Relativgeschwindigkeit aufweisen, die scheinbar von der Geschwindigkeit -vf abweichen. Vorzugsweise wird ein Bereich von -0,9 vf bis 1,1 vf berücksichtigt.

Wird ein Viererschnittpunkt in diesem Band gefunden, so werden die dazugehörigen Geraden aus der Abstands-/Geschwindigkeitsebene gestrichen. Damit wird sichergestellt, daß sie bei der weiteren Suche zu keinen Scheinzieldetektionen führen können. Das entsprechende Standziel wird gespeichert und in eine Detektionsliste eingetragen. Es steht dadurch für eine spätere Auswertung wieder zur Verfügung. Sobald die Suche in diesem Band bzw. Geschwindigkeitsbereich abgeschlossen ist, wird die Suche nach Zielen in der restlichen Abstands/Geschwindigkeitsebene fortgeführt. Da die Standziele mit ihren dazugehörigen Geraden bereits aus der Ebene entfernt wurden, können sie keine Scheinziele mehr verursachen.

Versuche haben ergeben, daß die Erfindung gegenüber den bekannten ACC-Systemen die Anzahl der Fehlreaktionen des ACC-Systems auf 0 reduzieren konnte.

**Patentansprüche**

**1.** Vorrichtung zum Bestimmen von Abständen und/oder Geschwindigkeiten zwischen einem Fahrzeug und mehreren beweglichen Objekten und Standzielen mit
einem FMCW-Radar, wobei von dem Fahrzeug periodisch ein Sendesignal ausgesendet wird, dessen Sendefrequenzen mit mindestens einer Frequenz-Rampe moduliert wird,
einer Einrichtung zum Erfassen der von den Objekten reflektierten Signale bzw. Empfangssignale und Ermitteln der jeweiligen Geraden und der Schnittpunkte dieser Geraden in einem Geschwindigkeits-Entfernungs-Diagramm,
einer Einrichtung zur Bestimmung und zum. Aussortieren der Schnittpunkte von Standzielen und der zugehörigen Geraden, und
einer Einrichtung zum Ausgeben der Abstände und/oder Geschwindigkeiten, die den übrigen Schnittpunkten entsprechen,
**gekennzeichnet durch**
ein Sendesignal, dessen Sendefrequenzen mit mindestens vier frequenz-Rampen moduliert wird, wovon mindestens zwei Frequenz-Rampen betragsmäßig unterschiedliche Steigungen haben, wodurch Scheinziele, die **durch** Schnittpunkte der Geraden entstehen, anhand der unterschiedlichen Geraden-Steigungen aussortiert werden können,
eine Einrichtung zum Bereitstellen der Fahrzeuggeschwindigkeit vf, wobei
die Einrichtung zur Bestimmung und zum Aussortieren einen ersten Schnittpunkt eines ersten Standzieles in einer ersten Abstands-/Geschwindigkeitsebene bestimmt und die mindestens vier zugehörigen Geraden aussortiert, der einer Geschwindigkeit vs entspricht, die im Bereich von -0,9*vf bis - 1,1*vf liegt, vorzugsweise gleich -vf beträgt, und
die Einrichtung zur Bestimmung und zum Aussortieren nachfolgend einen zweiten solchen Schnittpunkt eines zweiten standzieles in einer zweiten Abstands-/Geschwindigkeitsebene bestimmt und die mindestens vier zugehörigen Geraden aussortiert, der einer Geschwindigkeit vs entspricht, die im Bereich von - 0,9*vf bis -1,1*vf liegt, vorzugsweise gleich -vf beträgt.

**2.** Vorrichtung nach Anspruch 1, **gekennzeichnet durch** eine Einrichtung zum Speichern der Schnittpunkte und/oder der Geraden von Standzielen als Detektionsliste.

**3.** Fahrzeugführungssystem mit einem Tempomaten und einer Vorrichtung nach einem der vorstehenden Ansprüche.

**4.** Verfahren zum Bestimmen von Abständen und/oder Geschwindigkeiten zwischen einem Fahrzeug und mehreren beweglicken Objekten und Standzielen mittels einer Vorrichtung nach einem der vorstehenden Ansprüche.

## Claims

1. A device for determining distances and/or speeds between a vehicle and a number of moving objects and fixed obstacles, comprising
an FMCW radar, wherein the vehicle periodically transmits a signal at a frequency modulated by at least one frequency slope,
a means for detecting the signals received or reflected from the object and for determining the respective lines and the points of intersection between these lines in a speed-distance graph,
a means for determining and extracting the points of intersection between fixed obstacles and the associated lines, and
a device for outputting the distances and/or speeds corresponding to the other points of intersection, **characterised by**
a signal transmitted at frequencies modulated by at least four frequency slopes, at least two frequency slopes having different gradients, with the result that apparent obstacles resulting from intersection between the lines can be extracted on the basis of the different gradients, and
a means for obtaining the vehicle speed vf, wherein the determining and extracting means determines a first point of intersection of a first fixed obstacle in a first distance/speed plane and extracts the at least four associated lines corresponding to a speed vs in the range from -0.9* vf to - 1.1* vf, preferably equal to -vf, and
a determining and extracting means then determines another such point of intersection of a second fixed obstacle in a second distance/speed plane and extracts the at least four associated lines corresponding to a speed vs in the range from -0.9* vf to -1.1* vf, preferably equal to -vf.

2. A device according to claim 1, **characterised by** a means for storing a detection list in the form of the points of intersection and/or lines of fixed obstacles.

3. A vehicle steering system comprising a cruise control device and a device according to any of the preceding claims.

4. A method of determining distances and/or speeds between a vehicle and a number of moving objects and stationary obstacles, by means of a device according to any of the preceding claims.

## Revendications

1. Dispositif pour déterminer des distances et/ou vitesses entre un véhicule et plusieurs objets mobiles et cibles fixes comprenant :

- un radar FMCW, émettant périodiquement à partir du véhicule, un signal d'émission dont la fréquence d'émission est modulée au moins avec une rampe de fréquence,
- un dispositif destiné à acquérir les signaux réfléchis par les objets ou les signaux de réception, et à trouver les droites correspondantes et les points d'intersection de ces droites dans un diagramme vitesse-distance,
- un dispositif de détermination et d'élimination des points d'intersection de cibles fixes et les droites correspondantes, et
- un dispositif pour sortir les distances et/ou vitesses qui correspondent aux points d'intersection restants,

**caractérisé par**

- un signal d'émission dont la fréquence d'émission est modulée avec au moins quatre rampes de fréquence, dont au moins deux rampes de fréquence possèdent des pentes de différentes valeurs, de sorte que les fausses cibles qui résultent des points d'intersection des droites peuvent être éliminées sur la base des pentes différentes des droites,
- un dispositif pour former la vitesse vf du véhicule,
- le dispositif de détermination et d'élimination déterminant un premier point d'intersection d'une première cible fixe dans un premier plan distance/vitesse et éliminant les au moins quatre droites correspondantes, point qui correspond à une vitesse vs qui se trouve dans l'intervalle allant de -0,9*vf à -1,1*vf, et qui est de préférence égale à -vf, et
- le dispositif de détermination et d'élimination déterminant ensuite un deuxième point d'intersection de ce genre d'une deuxième cible fixe dans un deuxième plan distance/vitesse et éliminant les au moins quatre droites correspondantes, point qui correspond à une vitesse vs qui se trouve dans l'intervalle allant de -0,9*vf à -1,1*vf, et qui est de préférence égale à - vf.

2. Dispositif selon la revendication 1,
**caractérisé par**
un dispositif destiné à mémoriser les points d'intersection et/ou les droites de cibles fixes sous la forme d'une liste de détections.

3. Système de guidage de véhicule comprenant un Tempomate et un dispositif selon l'une des revendications précédentes.

**4.** Procédé pour déterminer des distances et/ou vitesses entre un véhicule et plusieurs objets mobiles et cibles fixes au moyen d'un dispositif selon l'une des revendications précédentes.

Fig. 1a

Frequenz f

gesendete Frequenz-rampen 1 und 2

Frequenzverlauf des Empfangs-signals

$df_1$

$df_2$

$dt = 2s/c$

Zeit t

s = const.

A Spektrum Rampe 1

$df_1$ df

A $df_2$ Spektrum Rampe 2

-df

Fig. 1b

Frequenz f

$df_1$ $df_2$

$dt = 2s/c$

Zeit t

s = const.

A $df_1$ df

A $df_2$ -df

Fig. 1c

$v_{rel} < 0$

$f_D = -2v_{rel}*f_0/c$

$f_0$ = mittlere Sendefrequenz

c = Lichtgeschwindigkeit

Frequenz f

$f_D$

$df_1$ $df_2$

$dt = 2s/c$

Zeit t

A $f_D$

$df_1$ df

A $f_D$

$df_2$ -df

Relativgeschwindigkeit

entspricht Peak aus
Rampe 2

Abstand

Zieldaten

entspricht Peak aus
Rampe 1

Fig. 2

Relativgeschwindigkeit

Scheinziel

Ziel 2

Abstand

Ziel 1

Scheinziel

Fig. 3

Relativgeschwindigkeit

Ziel 2

Abstand

Ziel 1

Fig. 4

Relativgeschwindigkeit v

2 Scheinziele mit Eigengeschwindigkeit
durch Geisterschnittpunkte

Abstand d

Standziele bei
der negativen
Eigengeschwindigkeit

d1          d2          d1

Fig. 5